# EUROPÄISCHE PATENTSCHRIFT

(11) **EP 2 134 214 B1**
(45) Veröffentlichungstag und Bekanntmachung des Hinweises auf die Patenterteilung: **19.10.2011**
(21) Anmeldenummer: 08716313.5
(22) Anmeldetag: 06.03.2008
(51) Int. Cl.: A47B 21/00

(54) **KABELFÜHRUNGSSYSTEM**
CABLE GUIDING SYSTEM
SYSTÈME GUIDE-CÂBLE

(30) Priorität: 07.03.2007 DE 102007011140; 07.03.2007 DE 202007004910 U
(43) Veröffentlichungstag der Anmeldung: 23.12.2009
(73) Patentinhaber: Elabo GmbH, 74564 Crailsheim (DE)
(72) Erfinder: GERLACH, Rainer, 74523 Schwäbisch Hall (DE)
(74) Vertreter: Stolmár, Matthias
(86) Internationale Anmeldenummer: PCT/EP2008/001798
(87) Internationale Veröffentlichungsnummer: WO 2008/107190

(56) Entgegenhaltungen:
- DE-A- 2 600 731
- FR-A- 2 700 913
- US-A1- 2007 040 483

## Beschreibung

Die vorliegende Erfindung betrifft ein Kabelführungssystem, das einen Ladenkörper und an diesem angeordnete Führungsschienen umfasst, ein Systemarbeitsplatz sowie die Verwendung des Kabelführungssystems für einen Systemarbeitsplatz.

Arbeitsplatzsysteme sind im Stand der Technik bekannt. Die DE 19 956 951 A und die DE 19 956 879 A offenbaren Arbeitsplatzmöbel mit einem Möbelgestell aus vertikalen Säulen und Quertraversen. Auch Arbeitsplatzmöbel für Werkstätten, Labore und dergleichen sind bekannt. So offenbart die DE 20 205 424 U1 Arbeitsmöbel mit wenigstens zwei Vertikalstützen, mit den Vertikalstützen verbundenen Quergliedern und mit wenigstens einer Arbeits- oder Bedienungsebene auf der Vorderseite. Die Arbeits- oder Bedienungsebenen können aus mehreren separaten Bauelementen individuell gebildet werden.

Bei Möbeln in Laboren, im Bürobereich oder dergleichen sind oftmals Leitungen (elektrische Leitungen, Kabel, etc.) verlegt. Dabei handelt es sich sowohl um fest installierte Leitungen, wie z.B. die Netzzuführung zu Steckdosen und fest eingebauten Geräten, als auch um temporäre Leitungen, wie z.B. Steckernetzteile, Messleitungen oder Netzkabel zu Geräten. Das Gemisch aus solchen Leitungen führt in der praktischen Anwendung von Arbeitsplatzsystemen zu Behinderungen wie
- Sichtbehinderung durch herunterhängende Messleitungen
- Belegung von Arbeitsfläche und damit Nutzungseinschränkung
- Schwieriges Entfernen von nacheinander verlegten konfektionierten Kabeln
- Herumliegende Kabelüberhänge
- Verknotung von Kabeln

Grundsätzlich bestehen diese Nachteile heutiger Systeme an allen elektrifizierten Arbeitsplätzen, jedoch verstärken sich die Probleme mit zunehmender Anzahl an Leitungen und insbesondere mit der Anzahl temporär verlegter Leitungen.

Systemarbeitsplätze, die eine Elektrifizierung oder Leitungssysteme umfassen, gehören ebenso zum Stand der Technik. Die EP 0506268 A beschreibt ein modulares Arbeitsplatzsystem mit Verkabelungsanordnung. Der dort offenbarte modulare Arbeitsplatz besteht aus einer horizontalen Arbeitsfläche, einem Halteelement und verschiedenen Wannen, wobei durch die Anordnung der Wannen Zugangswege für elektrische Kabel, Kommunikationsund Datenkabel geschaffen werden.

Die DE 29 603 538 A offenbart ein Arbeitsplatzsystem mit einer Zuleitung für Elektrizität oder Druckluft und einer Beleuchtungseinrichtung, wobei die Zuleitung für Elektrizität oder Druckluft über ein mittig über der Tischplatte angeordnetes Aufbaustativ geführt wird. Hierbei handelt es sich um dauerhaft angebrachte Zuleitungen. Um- und Nachrüstungen sind bei dieser Anordnung mit einem größeren Zeitaufwand verbunden.

Die DE 19 803 674 A offenbart ein Arbeitsplatzsystem, welches bei Gewährleistung von Um- und Nachrüstungsmöglichkeiten eine besonders effiziente Fertigung und einen geringen Materialaufwand bei aneinander gereihten Arbeitsplätzen ermöglichen soll.

Die Lehre basiert auf dem Grundgedanken, die Tragarme für eine Arbeitsebene über ein Knotenelement an den Stützfüßen zu befestigen, so dass die Tragarme nach innen versetzt und parallel zu den Stützfüßen angeordnet sind. Das Knotenelement soll dabei besonders vorteilhaft einsetzbar sein für Quertraversen, die mit einem lösbaren Kabelkanal versehen werden können.

Bei sämtlichen Ausführungsformen im Stand der Technik sind Zuleitungen, wie beispielsweise Strom- oder Datenkabel, die zu Geräten am Arbeitsplatz führen, entweder stationär dauerhaft verlegt oder behindern den Arbeiter am Systemarbeitsplatz.

Die DE 2600731A offenbart ein Kabelführungssystem nach dem Oberbegriff des Anspruchs 1.

Der Erfindung lag daher die Aufgabe zugrunde, ein Mittel zu finden, mit dem Zuleitungen an einem Arbeitsplatz leicht verlegt und entfernt werden können, wobei die Zuleitungen im Arbeitsbereich, d.h. auf der Arbeitsfläche, nicht behindernd oder störend wirken und auch aufgrund der besseren Optik verdeckt werden können.

Die Aufgabe wird erfindungsgemäß gelöst durch ein Kabelführungssystem, die einen Ladenkörper und an dem Ladenkörper angeordnete Führungsschienen umfasst, wobei der Ladenkörper einen Ladenboden, auf dem Mittel zum Festlegen von Leitungen angebracht sind, eine frontseitige Aussparung des Ladenkörpers für die Zuführung der Leitungen und an den Seitenwänden des Ladenkörpers angeordnete Führungsschienen umfasst, wobei das Mittel zum Festlegen der Leitungen aus einem elastomeren Material besteht und neben der frontseitigen Aussparung des Ladenkörpers eine Aussparung in den Seitenbereichen für die Zuführung von Leitungen vorgesehen ist.

Mit Hilfe dieses Kabelführungssystems können Leitungen auf dem Ladenboden temporär befestigt werden und hängen nicht auf die Arbeitsfläche herunter. Dies ist mit einem Platzgewinn auf der Arbeitsfläche verbunden, und ferner ermöglicht das Kabelführungssystem eine bessere Sicht auf die auf der Arbeitsfläche befindlichen Monitore. Mit Hilfe der Führungsschiene wird ermöglicht, dass der Ladenkörper wie eine gewöhnliche Schublade verschoben werden kann. Zuleitungen von Messgeräten, die sich an dem Arbeitsplatzsystem oberhalb des Kabelführungssystems befinden, können durch die Aussparung in der frontseitigen Wand des Ladenkörpers geführt werden. Die durch die frontsei-, tige Aussparung geführten Zuleitungen werden auf dem Ladenboden temporär befestigt und können dann weiter zu den Seitenbereichen oder zum rückseitigen Bereich des Ladenkörpers geführt werden. Von dort können die Leitungen aus dem Ladenkörper abgeführt werden. Aussparungen in den Seitenbereichen bedeutet hier sowohl Aussparungen in den Seitenwänden als auch Aussparungen in dem Ladenboden. Zu den Seitenbereichen zählen die Anteile des Ladenkörpers, die parallel und räumlich nahe den Führungsschienen verlaufen.

Erfindungsgemäß können die Aussparungen auch auf die Weise ausgeführt werden, dass die frontseitige Wand und/oder die Seitenwände fehlen.

Erfindungsgemäß besteht das Mittel zum Festlegen der Leitungen aus einem elastomeren Material. Ein biegsames Material bietet den Vorteil, dass Leitungen schnell befestigt und entfernt werden können, beispielsweise indem die Leitungen festgeklemmt werden.

Das Mittel zum Festlegen der Leitungen kann auch aus einer Vorrichtung zur Führung von Leitungen bestehen, die eine Grundfläche umfasst, die eine Auflagefläche sowie auf einer der Auflagefläche gegenüberliegenden Seite eine Vielzahl von Noppen mit einem Noppenfuß und einem Noppenkopf umfasst, wobei der Noppenkopf eine größere maximale Querschnittsfläche als der Noppenfuß in einer Schnittrichtung parallel zur Auflagefläche hat. Leitungen werden an den Noppenköpfen vorbei zwischen die Noppenfüße gedrückt und durch die Noppenfüße in dieser Einbaulage seitlich geführt und festgelegt. Die Noppenköpfe verhindern, dass sich die Leitungen z.B. durch eigene Vorspannung aus dieser Lage wieder herausbewegen. Die Noppenköpfe lassen ein Eindrücken der Leitungen zur Montage also zu, verhindern aber ein Herausfallen oder -Bewegen der Leitungen aufgrund ihrer Vorspannung oder eines Dralls der Leitungen. Die erfindungsgemäße Vorrichtung kann in jeder Einbaulage verwendet werden, die Noppenköpfe können also auch in Einbaulage der Vorrichtung nach unten zeigen und verhindern dabei ein Herausfallen der Leitungen. Diese Vorrichtung ermöglicht ein besonders schnelles und bequemes Installieren und Deinstallieren von Leitungen.

Bei dem Kabelführungssystem ist neben der frontseitigen Aussparung des Ladenkörpers eine Aussparung in den Seitenbereichen für Zuführung von Leitungen vorgesehen. Dadurch wird erreicht, dass Leitungen leichter verlegt oder entfernt werden können. Prinzipiell können die Kabel auch an einer beliebigen Stelle aus der Lade geführt werden.

Bei einer weiteren bevorzugten Ausführungsform des Kabelführungssystems sind die Seitenwände U-förmig gestaltet, wobei die offene Seite der U-förmig gestalteten Seite frontseitig angeordnet ist und die Führungsschiene an dem dem Ladenboden abgewandten Schenkel der U-förmigen Seitenwand angebracht ist. Betrachtet man eine handelsübliche Schublade, besteht diese aus einem Ladenboden, zwei Seitenwänden, eine frontseitige und eine rückseitige Wand sowie meistens aus zwei Führungsschienen. Eine solche Schublade ermöglicht kein Zuführen einer Leitung im Frontbereich in die Schublade und kein Abführen der Leitung in den Seitenbereichen aus der Schublade heraus, ohne die Möglichkeit zu haben, die Schublade in eine vollkommen eingeschobene Position zu bewegen. Die Aussparung an der frontseitigen Wand und die U-förmige Gestaltung der Seitenwände ermöglicht ein vollkommenes Einschieben des erfindungsgemäβen Kabelführungssystems und es ermöglicht ein schnelles Festlegen und Führen der Leitungen, ohne ein offenes Ende der Leitung durch eine Aussparung führen zu müssen.

Ein weiteres erfindungsgemäßes Kabelführungssystem ist an der frontseitigen Aussparung mit einer Dichtlippe oder einer Kabelbürste versehen.

Der Vorteil dieser Ausführungsform liegt darin, einen optischen Einblick in das erfindungsgemäße Kabelführungssystem zu verhindern, wenn sich dieses in vollkommen eingeschobener Position befindet.

In einer weiteren Ausführungsform ist die frontseitige Wand des Kabelführungssystems auf einer Klappachse gelagert, so dass der Ladenkörper zu öffnen und zu verschließen ist. Bei dieser Ausführungsform kann das Kabelführungssystem verborgen werden, wenn keine Leitungen festgelegt sind und sich das Kabelführungssystem in vollkommen eingeschobener Position befindet.

In einer weiteren Ausführungsform des erfindungsgemäßen Kabelführungssystems sind die Führungsschienen mit einer Einzugsvorrichtung kombiniert. Diese Einzugsvorrichtung kann Rollen umfassen, so dass für das Ein- und Ausschieben des Kabelführungssystems ein geringer Reibungswiderstand überwunden werden muss. Ferner kann die Einzugsvorrichtung mit Riegelmitteln versehen sein, so dass das Kabelführungssystem in der eingeschobenen Position einrastet.

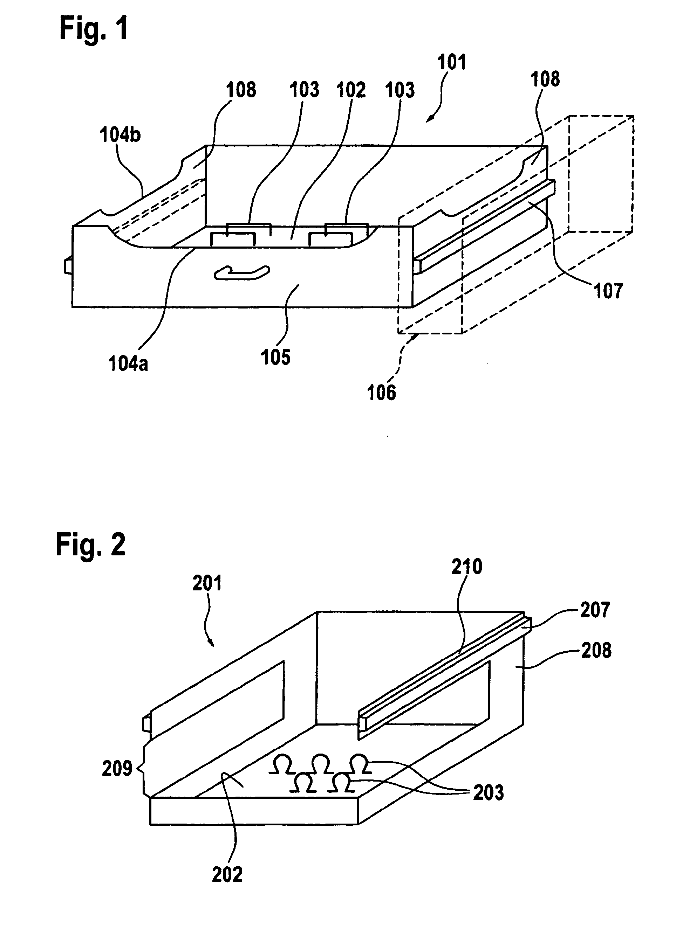

Das Kabelführungssystem findet erfindungsgemäß Verwendung für einen Systemarbeitsplatz. Der Vorteil eines solchen Systemarbeitsplatzes liegt in einer flexiblen Gestaltung des Arbeitsplatzes. Je nach Bedarf kann ein Messinstrument, Rechner oder beliebige andere Geräte an dem Systemarbeitsplatz einrichtet oder entfernt werden, ohne dass die Übersichtlichkeit am Systemarbeitsplatz Schaden nimmt oder die Einrichtung oder Entfernung der Geräte viel Zeit beansprucht. Insbesondere findet das Kabelführungssystem Verwendung bei einem Systemarbeitsplatz, bei dem oberhalb des Kabelführungssystems Messinstrumente, Rechner oder Mittel für einen Stromanschluss, Telefonanschluss oder für die Datenübertragung angeordnet sind. Anhand der Fig. 1 bis 3 soll die Erfindung nachfolgend beispielhaft erläutert werden.
- Fig. 1: zeigt ein Kabelführungssystem.
- Fig. 2: zeigt eine weitere Ausführungsform eines Kabelführungs- systems.
- Fig. 3: zeigt einen Systemarbeitsplatz mit einer Arbeitsplatte, einem Kabelführungssystem und auf oder an einer Quer- traverse befindliche Messgeräte oder Steckdosen.

Fig. 1 zeigt ein erfindungsgemäßes Kabelführungssystem bestehend aus einem Ladenkörper 101, einem Ladenboden 102, einer frontseitigen Wand 105 und den Seitenwänden 108. In den Seitenwänden und der frontseitigen Wand befinden sich Aussparungen 104a und 104b. Durch die frontseitige Aussparung können Leitungen in den Ladenkörper eingeführt werden, auf dem Mittel 103 zum Festlegung von Leitungen befestigt werden und anschließend aus den Aussparungen in den Seitenbereichen 106 aus dem Kabelführungssystem herausgeführt werden. Zum Verschieben des Ladenkörpers 101 befinden sich in den Seitenbereichen 106 Führungsschienen 107. In dem erfindungsgemäßen Ausführungsbeispiel der Fig. 1 sind diese Führungsschienen an den Seitenwänden angebracht. Ebenso sind die Aussparungen 104b in den Seitenwänden 108 vorhanden. Sowohl die Aussparungen als auch die Führungsschienen könnten erfindungsgemäß an der Außenfläche des Ladenbodens vorhanden sein.
Fig. 2 zeigt ein erfindungsgemäßes Kabelführungssystem mit einem Ladenkörper 201. In dieser erfindungsgemäßen Ausführungsform sind die Seitenwände 208 U-förmig ausgestaltet, wobei die offene Seite 209 der U-förmigen Seitenwand 208 frontseitig angeordnet ist. Fig. 2 zeigt die Mittel 203 zum Festlegen von Leitungen sowie die Führungsschiene 207, die in diesem Ausführungsbeispiel an dem dem Ladenboden 202 abgewandten Schenkel 210 der U-förmigen Seitenwand angebracht ist. Vorteil dieser Ausführungsform ist, dass Leitungen von oben durch die Frontseite geführt werden können, auf den Mitteln 203 zum Festlegen der Leitungen befestigt werden können und anschließend durch die offene Seitenwand herausgeführt werden können. Diese Ausführungsform ermöglicht das Ein- und Ausschieben des erfindungsgemäßen Kabelführungssystems, ohne ein offenes Ende einer Leitung durch eine Aussparung schieben zu müssen.

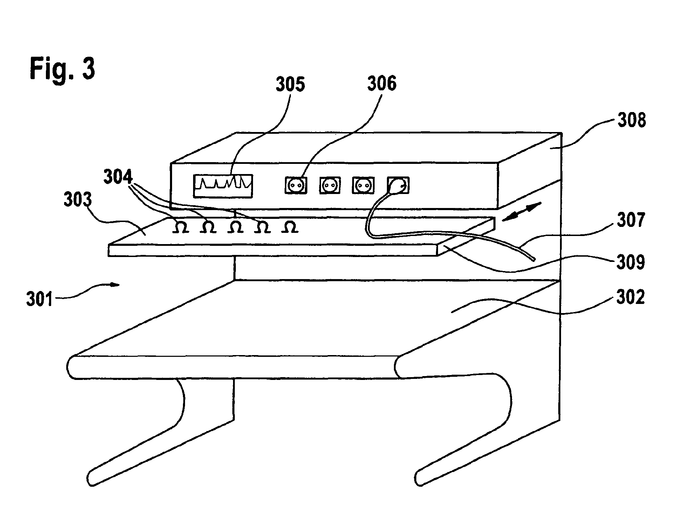

Fig. 3 zeigt ein Systemarbeitsplatz 301 mit einer Arbeitsplatte 302. Fig. 3 zeigt ferner eine Quertraverse 308, an der Messinstrumente 305, Steckdosen 306 oder Ähnliches angebracht sind. Eine Leitung 307 kann von oben in das Kabelführungssystem eingeführt werden, an den Mitteln 304 zum Festlegen von Leitungen befestigt werden, und an dem Kabelführungssystem 303 seitlich abgeführt werden. Es wird ausdrücklich darauf hingewiesen, dass die Leitungen auch an einer anderen Stelle von dem Ladenkörper abgeführt werden. Nach dem Aufstellen von Messinstrumenten auf der Quertraverse können Leitungen in dem Kabelführungssystem befestigt werden. Die Leitungen werden seitlich an dem Kabelführungssystem abgeführt. Dadurch wird erreicht, dass die Arbeitsplatte frei von Leitungen ist. Das Kabelführungssystem kann dann erfindungsgemäß unter die Quertraverse eingeschoben werden.

## Patentansprüche

1. Kabelführungssystem, das einen Ladenkörper (101) umfassend einen Ladenboden (102), auf dem Mittel (103) zum Festlegen von Leitungen angebracht sind, eine frontseitige Aussparung (104a) des Ladenkörpers (101) für die Zuführung der Leitungen, und an den Seitenwänden (108) des Ladenkörpers (101) angeordnete Führungsschienen (107) umfasst, **dadurch gekennzeichnet, dass** das Mittel (103) zum Festlegen der Leitungen aus einem elastomeren Material besteht und dass neben der frontseitigen Aussparung (104a) des Ladenkörpers (101) eine Aussparung (104b) in den Seitenbereichen (106) für die Zuführung von Leitungen vorgesehen ist.

2. Kabelführungssystem nach Anspruch 1, bei dem die Seitenwände (108) U-förmig gestaltet sind, wobei die offene Seite der U-förmig gestalteten Seitenwand (208) frontseitig angeordnet ist und die Führungsschiene (207) an dem dem Ladenboden abgewandten Schenkel der U-förmigen Seitenwand (208) angebracht ist.

3. Kabelführungssystem nach Anspruch 1 oder 2, bei dem die frontseitige Aussparung (104a) mit einer Dichtlippe oder einer Kabelbürste versehen ist.

4. Kabelführungssystem nach einem der Ansprüche 1 bis 3, bei dem die frontseitige Wand (105) auf einer Klappachse gelagert ist, so dass der Ladenkörper zu öffnen und zu verschließen ist.

5. Kabelführungssystem nach einem der Ansprüche 1 bis 4, bei dem die Führungsschiene (107) mit einer Einzugsvorrichtung kombiniert ist.

6. Kabelführungssystem nach Anspruch 5, bei dem die Einzugsvorrichtung auf Rollen gelagert ist und/oder die Einzugsvorrichtung mit Riegelmitteln versehen ist, so dass das Kabelführungssystem in der eingeschobenen Position einrastet.

7. Systemarbeitsplatz, der ein Kabelführungssystem gemäß einem der vorhergehenden Ansprüche umfasst.

8. Systemarbeitsplatz nach Anspruch 7, der ein Kabelführungssystem, eine Arbeitsplatte und eine Quertraverse oberhalb des Kabelführungssystems umfasst.

9. Verwendung des Kabelführungssystems gemäß einem der Ansprüche 1 bis 6 für einen Systemarbeitsplatz.

10. Verwendung nach Anspruch 9, bei der oberhalb des Kabelführungssystems Messinstrumente, Rechner oder Mittel für einen Stromanschluss, Telefonanschluss oder für die Datenübertragung angeordnet sind.

## Claims

1. Cable routing system which comprises a tray body (101) comprising a tray base (102) on which means (103) of fixing cables are mounted, a front recess (104a) of the tray body (101) for routing the cables, and guide rails (107) attached to the side walls (108) of the tray body (101), **characterized in that** the means (103) of fixing the cables is composed of an elastomer material and **in that**, in addition to the front recess (104a) of the tray body (101), a recess (104b) is provided in the side areas (106) for routing the cables.

2. Cable routing system according to claim 1, in which the side walls (108) are designed U-shaped, wherein the open side of the side wall (208) designed U-shaped is arranged at the front, and the guide rail (207) is mounted on the side of the U-shaped sid wall (208) facing away from the tray base.

3. Cable routing system according to claim 1 or 2, in which the front recess (104a) is provided with a sealing lip or a cable brush.

4. Cable routing system according to one of claims 1 to 3, in which the front wall (105) is mounted on a hinge axis, with the result that the tray body can be opened and closed.

5. Cable routing system according to one of claims 1 to 4, in which the guide rail (107) is combined with a retraction device.

6. Cable routing system according to claim 5, in which the retraction device is mounted on rollers and/or the retraction device is provided with locking means, with the result that the cable routing system locks into place in the pushed-in position.

7. System workstation, which comprises a cable routing system according to one of the previous claims.

8. System workstation according to claim 7, which comprises a cable routing system, a work surface and a cross-arm above the cable routing systems.

9. Use of the cable routing system according to one of claims 1 to 6 for a system workstation.

10. Use according to claim 9, in which measuring instruments, computers or means for an electrical connection, telephone connection or for data transmission are arranged above the cable routing system.

## Revendications

1. Système de guidage de câbles qui comprend un corps de tiroir (101) comprenant un fond de tiroir (102) sur lequel des moyens (103) pour la fixation de lignes sont montés, un évidement frontal (104a) du corps de tiroir (101) pour l'amenée des lignes, et des rails de guidage (107) disposés sur les parois latérales (108) du corps de tiroir (101), **caractérisé en ce que** le moyen (103) pour la fixation des lignes se compose d'un matériau élastomère et que, outre l'évidement frontal (104a) du corps de tiroir (101), un évidement (104b) est prévu dans les régions latérales (106) pour l'amenée de lignes.

2. Système de guidage de câbles selon la revendication 1, dans lequel les parois latérales (108) sont configurées en forme de U, dans lequel le côté ouvert de la paroi latérale configurée en forme de U (208) est disposé du côté frontal et le rail de guidage (207) est monté sur la branche détournée du fond de tiroir de la paroi latérale en forme de U (208).

3. Système de guidage de câbles selon la revendication 1 ou 2, dans lequel l'évidement frontal (104a) est pourvu d'une lèvre d'étanchéité ou d'un balai de câble.

4. Système de guidage de câbles selon l'une quelconque des revendications 1 à 3, dans lequel la paroi frontale (105) est logée sur un axe de basculement de sorte que le corps de tiroir est à ouvrir et à fermer.

5. Système de guidage de câbles selon l'une quelconque des revendications 1 à 4, dans lequel le rail de guidage (107) est combiné à un dispositif de retrait.

6. Système de guidage de câbles selon la revendication 5, dans lequel le dispositif de retrait est logé sur des rouleaux et/ou le dispositif de retrait est pourvu de moyens de verrou de sorte que le système de guidage de câbles s'encliquette dans la position rétractée.

7. Poste de travail système qui comprend un système de guidage de câbles selon l'une quelconque des revendications précédentes.

8. Poste de travail système selon la revendication 7, qui comprend un système de guidage de câble, une plaque de travail et une entretoise transversale au-dessus du système de guidage de câbles.

9. Utilisation du système de guidage de câbles selon l'une quelconque des revendications 1 à 6 pour un poste de travail système.

10. Utilisation selon la revendication 9, dans laquelle des instruments de mesure, ordinateurs ou moyens pour un raccord électrique, un raccord téléphonique ou pour le transfert de données sont disposés au-dessus du système de guidage de câbles.
